Europäisches Patentamt

European Patent Office

Office européen des brevets

(11) Veröffentlichungsnummer: **0 653 468 A2**

# (12) EUROPÄISCHE PATENTANMELDUNG

(21) Anmeldenummer: 94117557.2

(22) Anmeldetag: 08.11.94

(51) Int. Cl.6: **C09D 133/04**, C08K 5/16,
//(C09D133/04,161:20)

(30) Priorität: 12.11.93 DE 4338703
17.02.94 DE 4405042

(43) Veröffentlichungstag der Anmeldung:
**17.05.95 Patentblatt 95/20**

(84) Benannte Vertragsstaaten:
**AT BE DE ES FR GB IT NL PT SE**

(71) Anmelder: **Herberts Gesellschaft mit beschränkter Haftung**
**Christbusch 25**
**D-42285 Wuppertal (DE)**

(72) Erfinder: **Bederke, Klaus, Dr.**
**Oststrasse 36**
**D-45549 Sprockhövel (DE)**
Erfinder: **Kerber, Herrmann**
**Daniel-Schürmann-Weg 37**
**D-42369 Wuppertal (DE)**
Erfinder: **Dahm, Ralf**
**Wemschebach 8**
**D-42929 Wermelskirchen (DE)**
Erfinder: **Reifferscheidt, Heinz Werner**
**Immanuel-Kant-Strasse 39**
**D-44803 Bochum (DE)**
Erfinder: **Herrmann, Friedrich**
**Friedrichsallee 27**
**D-42117 Wuppertal (DE)**
Erfinder: **Flosbach, Carmen, Dr.**
**Düsseldorfer Strasse 55**
**D-42115 Wuppertal (DE)**
Erfinder: **Philipp, Dieter**
**Hohenstein 140**
**D-42283 Wuppertal (DE)**
Erfinder: **Schubert, Walter, Dr.**
**Unterdahl 22**
**D-42349 Wuppertal (DE)**

(74) Vertreter: **Türk, Gille, Hrabal, Leifert**
**Brucknerstrasse 20**
**D-40593 Düsseldorf (DE)**

(54) **Überzugsmittel für transparente Decklackschichten und deren Verwendung bei Verfahren zur Herstellung von Mehrschichtüberzügen.**

㊼ Beschrieben werden Überzugsmittel und ihre Verwendung bei der Herstellung transparenter Deckschichten von Mehrschichtüberzügen. Sie enthalten Bindemittel auf der Basis hydroxyfunktioneller (Meth)acryl-Copolymerisate, geblockter Polyisocyanate, Aminoplastharze und gegebenenfalls hydroxyfunktioneller Polyesterharze, neben lacküblichen Additiven und Lösemitteln, und sind dadurch gekennzeichnet, daß die Bindemittel enthalten:

A) 25 - 90 Gew.-% eines oder mehrerer hydroxyfunktioneller (Meth)acryl-Copolymerisate, erhältlich aus

a1) 10 - 30 Gew.-% Styrol und/oder einem oder mehreren Styrol-Derivaten

a2) 20 - 40 Gew.-% eines oder mehrerer Glycidylester und/oder Vinylester von alpha,alpha'-dialkylsubstituierten verzweigten aliphatischen Monocarbonsäuren

a3) 5 - 15 Gew.-% eines oder mehrerer Hydroxyalkylester der (Meth)acrylsäure

a4) 1 - 15 Gew.-% (Meth)acrylsäure

a5) 15 - 35 Gew.-% eines oder mehrerer (Meth)acrylsäureester

B) 0 - 40 Gew.-% eines oder mehrerer hydroxyfunktioneller (Meth)acryl-Copolymerisate erhältlich aus

b1) 5 - 20 Gew.-% Styrol und/oder einem oder mehreren Styrol-Derivaten

b2) 5 - 20 Gew.-% Caprolacton

b3) 10 - 30 Gew.-% eines oder mehrerer Hydroxyalkylester von (Meth)acrylsäure

b4) 1 - 3 Gew.-% (Meth)acrylsäure

b5) 30 - 50 Gew.-% eines oder mehrerer (Meth)acrylsäureester

C) 0 - 40 Gew.-% eines oder mehrerer hydroxylfunktioneller Polyester

D) 5 - 35 Gew.-% eines oder mehrerer geblockter Polyisocyanate

E) 5 - 30 Gew.-% eines oder mehrerer Aminoplastharze

wobei die Summe der Komponenten a1) bis a5), b1) bis b5) und A) bis E) sich jeweils zu 100 ergänzen.

Die Erfindung betrifft Überzugsmittel für transparente Einbrenn-Mehrschichtüberzüge für die Autoserienlackierung, die sich durch eine hohe Beständigkeit gegen den "sauren Regen" (Acid-Rain-Resistance) und einen hohen Verarbeitungsfestkörper auszeichnen.

Die JP-Patentveröffentlichung No. 1(1989)-158079 beschreibt Überzugsmittel auf der Basis von Caprolacton-modifizierten und gegebenenfalls zusätzlich Hydroxyalkyl(meth)acrylate enthaltenden Polyacrylatharzen, alkylierten Melaminharzen und gegebenenfalls geblockten Polyisocyanaten. Mit derartigen Überzugsmitteln können zwar festkörperreiche Automobillackierungen hergestellt werden, das in der Technik geforderte Eigenschaftsniveau bezüglich Acid-Rain-Resistance wird jedoch nicht erreicht. Die Lacke neigen zum Vergilben und besitzen einen geringen Anfangsglanz.

Die GB-A-2 254 328 und die JP-Patentveröffentlichung 5 025 431 beschreiben Überzugsmittel aus hydroxyfunktionellen Polyacrylatharzen und Polyesterharzen, alkylierten Melaminharzen und Hexamethoxymethylmelaminharzen, geblockten Säure-Katalysatoren und geblockten Polyisocyanaten, die zwar erhöhte Säurebeständigkeit aufweisen, jedoch einen niedrigen Verarbeitungsfestkörper (Low-Solid) besitzen. Auch diese Lacke sind nicht vergilbungsstabil und der Anfangsglanz ist verbesserungsbedürftig.

Die JP-Patentveröffentlichung No. 4(1992)-246483 unterscheidet sich von der GB-A-2 254 328 dadurch, daß die Überzugsmittel-Zusammensetzung zusätzlich einen Katalysator in Form von Sn-organischen Verbindungen enthält.

Die DE-A-42 04 518 beschreibt nicht-wäßrige transparente Decklacke auf der Basis von hydroxylgruppenhaltigen Kunstharzen, Aminoplastharzen und blockierten Polyisocyanaten, wobei letztere sowohl mit Dialkylmalonaten als auch mit Methylengruppen enthaltenden Blockierungsmitteln oder Oximen blockiert sind. Auch hier ist die Säurebeständigkeit der erhaltenen Lackierungen nicht voll zufriedenstellend.

Aufgabe der vorliegenden Erfindung war es, Überzugsmittel für Einbrenn-Mehrschichtüberzüge bereitzustellen, die für die Automobilserienlackierung geeignet sind und die sowohl einen hohen Verarbeitungsfestkörper (High-Solid) als auch eine verbesserte Beständigkeit gegen den "sauren Regen", die sich analytisch durch eine hohe Beständigkeit gegen Schwefelsäure darstellen läßt, aufweisen.

Es hat sich gezeigt, daß die Forderung nach schwefelsäurebeständigen und gleichzeitig festkörperreichen Beschichtungsmitteln durch Überzugsmittel erfüllt werden kann, welche eines oder mehrere hydroxyfunktionelle (Meth)acryl-Copolymerisate, neben geblockten Polyisocyanaten, Aminoplastharzen, lacküblichen Additiven und Lösemitteln, sowie gegebenenfalls einem oder mehreren hydroxyfunktionellen Polyestern enthalten.

Gegenstand der Erfindung sind daher die vorstehenden Überzugsmittel, deren Bindemittel enthalten:
A) 25 - 90 Gew.-% eines oder mehrerer hydroxyfunktioneller (Meth)acryl-Copolymerisate, erhältlich aus
    a1) 10 - 30 Gew.-% Styrol und/oder einem oder mehreren Styrol-Derivaten
    a2) 20 - 40 Gew.-% eines oder mehrerer Glycidylester und/oder Vinylester von alpha,alpha'-dialkylsubstituierten verzweigten aliphatischen Monocarbonsäuren
    a3) 5 - 15 Gew.-% eines oder mehrerer Hydroxyalkylester der (Meth)acrylsäure
    a4) 1 - 15 Gew.-% (Meth)acrylsäure
    a5) 15 - 35 Gew.-% eines oder mehrerer (Meth)acrylsäureester
B) 0 - 40 Gew.-%, bevorzugt 10 bis 30 Gew.-% eines oder mehrerer hydroxyfunktioneller (Meth)acryl-Copolymerisate erhältlich aus
    b1) 5 - 20 Gew.-% Styrol und/oder einem oder mehreren Styrol-Derivaten
    b2) 5 - 20 Gew.-% Caprolacton
    b3) 10 - 30 Gew.-% eines oder mehrerer Hydroxyalkylester von (Meth)acrylsäure
    b4) 1 - 3 Gew.-% (Meth)acrylsäure
    b5) 30 - 50 Gew.-% eines oder mehrerer (Meth)acrylsäureester
C) 0 - 40 Gew.-%, bevorzugt 10 bis 30 Gew.-% eines oder mehrerer hydroxylfunktioneller Polyester
D) 5 - 35 Gew.-% eines oder mehrerer geblockter Polyisocyanate
E) 5 - 30 Gew.-% eines oder mehrerer Aminoplastharze
wobei die Summe der Komponenten a1) bis a5), b1) bis b5) und A) bis E) sich jeweils zu 100 ergänzen.

Die Herstellung der in den erfindungsgemäßen Überzugsmitteln enthaltenen (Meth)acryl-Copolymerisate kann durch radikalische Copolymerisation nach üblichen Verfahren erfolgen. Für die Synthese der im erfindungsgemäßen Überzugsmittel eingesetzten (Meth)acryl-Copolymerisate (Komponente A und B) wird das Lösungspolymerisationsverfahren bevorzugt. Bei diesem Verfahren wird das Lösemittel in das Reaktionsgefäß vorgelegt, auf Siedetemperatur geheizt und das Monomeren/Initiatorgemisch kontinuierlich in einer bestimmten Zeit zudosiert.

Der in der vorliegenden Beschreibung und den Patentansprüchen gebrauchte Ausdruck "(Meth)acryl" steht synonym für "Acryl und/oder Methacryl".

3

Die Polymerisation wird beispielsweise bei Temperaturen zwischen 80°C und 160°C, vorzugsweise bei 100°C bis 150°C durchgeführt.

Die Polymerisationsreaktion kann mit bekannten Polymerisationsinitiatoren gestartet werden. Beispiele für geeignete Initiatoren sind Per- und Azo-Verbindungen, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperaxid; Perester, wie tert.-Butyl-perbenzoat, tert.-Butyl-perpivalat, tert.-Butyl-per-3,5,5-tri-methylhexanoat, tert.-Butyl-per-2-ethylhexanoat; Peroxydicarbonate, wie Di-2-ethylhexyl-peroxydicarbonat, Dicyclo-hexyl-peroxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azo-bis(2,4-dimethylvaleronitril),2,2'-Azo-bis-(2-methylbutyronitril)-,1,1'-Azo-bis-cyclohexancarbonitril, Azo-bis-isobutyronitril.

Es ist bevorzugt die Polymerisationsinitiatoren, insbesondere die Perester in einer Menge von 0,2 bis 5 Gew.-% auf die Monomeren-Einwaage, einzusetzen.

Als organische Lösemittel, die zweckmäßigerweise bei der Lösungspolymerisation eingesetzt werden können, eignen sich lackübliche Lösemittel, wie sie später auch in dem erfindungsgemäßen Überzugsmittel eingesetzt werden können, beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe können ebenfalls im Verschnitt mit den oben genannten Lösemitteln eingesetzt werden.

Zur Regelung des Molekulargewichts können insbesondere bei der bevorzugten Lösungspolymerisation Kettenüberträger mitverwendet werden. Beispiele sind Mercaptane, Thioglykolsäureester, Chlorkohlenwasserstoffe, Cumol, dimeres alpha-Methylstyrol.

Die Polymerisationsbedingungen (Reaktionstemperatur, Zulaufzeit der Monomerenmischung, Lösungskonzentration) werden so eingerichtet, daß die (Meth)acryl-Copolymerisate für das erfindungsgemäß hergestellte Überzugsmittel ein Gewichtsmittel der Molmasse (bestimmt durch Gelpermeationschromatographie unter Verwendung von Polystyrol als Eichsubstanz) zwischen 2500 - 10000 aufweisen.

Die hydroxylgruppenhaltigen (Meth)acryl-Copolymerisate des erfindungsgemäß hergestellten Überzugsmittels liegen bevorzugt in einem Glasübergangstemperatur-Bereich von -20°C bis +40°C, berechnet aus der Glasübergangstemperatur der Homopolymerisate der einzelnen der in der Literatur angegebenen Monomeren (FOX-Gleichung, s. z.B. Polymere Werkstoffe, Batzer, 1985, Seite 307).

Als Monomere für die Herstellung der hydroxyfunktionellen (Meth)acryl-Copolymerisate (Komponente A) werden als Komponente a2) beispielsweise Glycidyl- und/oder Vinylester von alpha, alpha'-Dialkylsubstituierten verzweigten aliphatischen Monocarbonsäuren (beispielsweise die Handelsprodukte CARDURA E10 und VEOVA 10 der Shell AG) eingesetzt. Die weiteren Monomeren für die Herstellung der (Meth)acryl-Copolymerisate (Komponente A und B) sind beispielsweise Styrol und/oder Styrol-Derivate, z.B. Vinyltoluol, p-Methylstyrol und p-tert-Butylstyrol, Hydroxyalkylester der Acrylsäure oder Methacrylsäure wie beta-Hydroxyethylacrylat, beta-Hydroxyethylmethacrylat, beta-Hydroxypropylacrylat, beta-Hydroxypropylmethacrylat, Butandiol-1,4-monoacrylat, Butandiol-1,4-monomethacrylat, Hexandiol-1,6-monoacrylat, Hexandiol-1,6-monomethacrylat. Es können auch, zumindest teilweise, Polyalkylenoxid-mono-(meth)acrylate mit 2 bis 10 Alkylenoxid-Einheiten pro Molekül eingesetzt werden; ferner Alkylester der Acrylsäure oder Methacrylsäure: Methylacrylat, Methylmethacrylat, Ethylacrylat, Ethylmethacrylat, Iso-Propylmethacrylat, tert.-Butylacrylat, n-Butylacrylat, n-Butylmethacrylat, Iso-Butylacrylat, Iso-Butylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stearylacrylat, Stearylmethacrylat, Isobornylacrylat, Isobornylmethacrylat.

Zur Ausstattung der (Meth)acryl-Copolymerisate A) und B) mit Carboxyl-Gruppen wird (Meth)acrylsäure bevorzugt in derartigen Mengen einpolymerisiert, daß eine Säurezahl von 1 bis 30 mg KOH/g resultiert. Zur Einführung von Hydroxylgruppen in die (Meth)acrylcopolymerisate A) und B) werden Hydroxyalkylester der (Meth)acrylsäure (a3 bzw. b3) bevorzugt in derartigen Mengen verwendet, daß Hydroxylzahlen von 40 bis 200 mg KOH/g resultieren.

Die als Komponente C) wahlfrei eingesetzten Polyester stellen Polykondensationsprodukte dar aus mehrwertigen Polycarbonsäuren (z.B. Dicarbonsäuren) oder deren Anhydriden und mehrwertigen Polyolen, eventuell unter Mitverwendung von Monocarbonsäuren. Derartige Polyester werden in der Regel mit einem

EP 0 653 468 A2

Alkohol-Überschuß hergestellt. Die OH-Zahlen liegen beispielsweise bei 30 bis 200, vorzugsweise bei 60 bis 160 mg KOH/g, die Säurezahlen beispielsweise bei 1 bis 50, vorzugsweise bei 5 bis 30. Die gewichtsmittleren Molekulargewichte betragen beispielsweise 500 bis 4000, vorzugsweise 1000 bis 2000 g/Mol. Als Beispiele für geeignete Polycarbonsäuren seien o-Phthalsäure(anhydrid), Isophthalsäure, Terephthalsäure, Tetrahydrophthalsäure-(anhydrid), 1,2-Cyclohexandicarbonsäure(anhydrid), 1,3-Cyclohexandicarbonsäure, 1,4-Cyclohexandicarbonsäure, 4-Methylhexahydrophthalsäure(anhydrid), Endomethylentetrahydrophthalsäure(anhydrid), Trimellithsäure(anhydrid), Bernsteinsäure(anhydrid), Glutarsäure, Adipinsäure, Acelainsäure, Sebacinsäure, Butantetracarbonsäure, Dimer-Fettsäure genannt.

Die Polyester können auch geringe Anteile an Maleinsäureanhydrid einkondensiert enthalten. Gegebenenfalls können zusammen mit den oben genannten Polycarbonsäuren auch natürliche und synthetische Monocarbonsäuren eingesetzt werden, wie z.B. Benzoesäure, tert.-Butylbenzoesäure, Laurinsäure, Isononansäure und Fettsäuren aus natürlich vorkommenden Ölen.

Geeignete Alkoholkomponenten zur Herstellung der Polyester sind beispielsweise Diole, wie Ethylenglykol, Diethylenglykol, Triethylenglykol, Polyethylenglykole, Propandiole, Polypropylenglykole, Butandiole, Hexandiole, Neopentylglykol, Cyclohexandiol, Cyclohexandimethanol, Trimethylpentandiol, Ethylbutylpropandiol, sowie mehrwertige Alkohole, z.B. Trimethylolethan, Trimethylolpropan, Di-Trimethylolpropan, Glycerin, Pentaerythrit, Di-Pentaerythrit, Tris-hydroxyethylisocyanurat.

Die Polyester können als Modifizierungskomponente Glycidylester von alpha,alpha'-disubstituierten Monocarbonsäuren und epsilon-Caprolacton enthalten.

Die erfindungsgemäßen Überzugsmittel enthalten als Komponente D) geblockte aliphatische oder cycloaliphatische Polyisocyanate, wie sie auf dem Lacksektor üblich sind, z.B. Diisocyanate, wie Isophorondiisocyanat, Hexamethylendiisocyant, und 1,3-Dimethyl-cyclohexyl-1,3-diisocyanat. Beispiele für aliphatische oder cycloaliphatische Polyisocyanate sind auch Biuret-Gruppen enthaltende Umsetzungsprodukte aus 3 Molen Hexamethylendiisocyanat mit 1 Mol Wasser mit einem NCO-Gehalt von ca. 22 %; Isocyanuratgruppen enthaltende Polyisocyanate, die durch Trimerisierung von 3 Molen Diisocyanat hergestellt werden, z.B. Hexamethylendiisocyanat- oder Isophorondiisocyanat-Trimere; Urethangruppen enthaltende Polyisocyanate, welche Reaktionsprodukte darstellen aus 3 Molen Diisocyanat und 1 Mol Triol. Bevorzugt eingesetzt werden Isophorondiisocyanat-Trimere.

Als Blockierungsmittel können übliche CH-acide, NH- oder OH-funktionelle Verbindungen verwendet werden, die unter Härtungsbedingungen die Vernetzung ermöglichen, wie CH-acide Ester, z.B. Acetessigsäurealkylester, Malonsäuredialkylester, epsilon-Caprolactam, Alkohole, wie tert.-Butanol und Oxime, wie Methylethylketoxim. Malonsäuredialkylester und Oxime sind bevorzugt. Dabei kann es günstig sein, verschiedene Verkappungsmittel gleichzeitig zur Anwendung zu bringen, was innerhalb eines Polyisocyanatmoleküls oder im Gemisch erfolgen kann.

Es hat sich gezeigt, daß die erfindungsgemäßen Überzugsmittel insbesondere dann zu möglichst hellen, im wesentlichen vergilbungsfreien Überzügen führen, wenn als Komponente D) geblockte Polyisocyanate eingesetzt werden, die durch Umsetzung von freien Isocyanaten unter wasserfreien Bedingungen, mit aciden Wasserstoff enthaltenden Blockierungsmitteln, in Anwesenheit von basischen Katalysatoren hergestellt werden, wobei man als basische Katalysatoren ein oder mehrere Alkalihydroxide verwendet. Die so erhaltenen blockierten Polyisocyanate weisen einen besonders geringen Alkaligehalt, bedingt durch den Einsatz basischer Katalysatoren, auf. Dieser liegt bevorzugt unter 100 ppm, besonders bevorzugt unter 80 ppm und unter 50 ppm, berechnet als das Gewicht der Alkalimetalle und bezogen auf das Gewicht der blockierten Isocyanate.

Diese Herstellungsweise kann auf beliebige Polyisocyanate mit freien Isocyanatfunktionen angewendet werden. Beispiele sind die bereits vorstehend genannten Polyisocyanate.

Für die genannte Herstellungsweise können bekannte Blockierungsmittel verwendet werden, die aciden Wasserstoff enthalten. Beispiele hierfür sind die bereits vorstehend genannten, insbesondere Malonsäuredialkylester und Acetessigsäurealkylester. Die Alkylgruppen der Ester, die im Malonsäuredialkylester gleich oder verschieden sein können, weisen bevorzugt 1 bis 4 Kohlenstoffatome auf.

Bei der genannten Herstellungsweise kann das Molverhältnis der aciden Wasserstoff enthaltenden Blockierungsmittel zu den NCO-Gruppen der Isocyanate, beispielsweise das Verhältnis der Malonsäuredialkylester und/oder Acetessigsäurealkylester zu NCO-Gruppen variiert werden, beispielsweise von 0,5 : 1 bis 1 : 1,5. Bei einem NCO-Überschuß können die freien NCO-Gruppen gegebenenfalls mit anderen Reaktionspartnern umgesetzt werden.

Bei den für das genannte Verfahren eingesetzten Katalysatoren handelt es sich um Alkalihydroxide, beispielsweise Alkalimetallhydroxide, wie Lithium-, Natrium- und/oder Kaliumhydroxid. Bevorzugt werden die wasserfreien Alkalimetallhydroxide eingesetzt. Besonders bevorzugt wird Lithiumhydroxid verwendet. Die Katalysatoren werden in katalytischen Mengen eingesetzt, beispielsweise in Mengen von 0,1 bis 2 Gew.-%,

bevorzugt 0,3 bis 1 Gew.-%, bezogen auf das Gewicht von Isocyanat und Blockierungsmittel.

Die Katalysatoren werden in fester Form, beispielsweise pulverisiert, eingesetzt.

Die Addition des Blockierungsmittels an das Isocyanat wird unter wasserfreien Bedingungen, bevorzugt unter sorgfältigem Ausschluß von Feuchtigkeit durchgeführt. Die Umsetzung kann beispielsweise unter einem trockenen Inertgas, wie Stickstoff, durchgeführt werden.

Die Umsetzung kann lösemittelfrei oder in Gegenwart von organischen Lösemitteln erfolgen. Geeignete Lösemittel sind insbesondere solche, die nicht mit Polyisocyanaten reagieren. Beispiele für solche Lösemittel sind organische Lösemittel, wie aliphatische und aromatische Kohlenwasserstoffe, beispielsweise Xylol, Gemische aliphatischer und/oder aromatischer Kohlenwasserstoffe, Ester und Ether.

Vorzugsweise wird die Reaktion so durchgeführt, daß der Katalysator im Isocyanat und dem gegebenenfalls vorhandenen Lösemittel dispergiert wird und das Blockierungsmittel, beispielsweise der Malonsäuredialkylester bzw. der Acetessigsäurealkylester in kleinen Portionen zugegeben wird.

Die Reaktion kann unter Erwärmen durchgeführt werden. Die Temperatur beträgt beispielsweise 50 bis 100°C, vorzugsweise 80 bis 100°C.

Die Reaktion wird solange bei der angegebenen Temperatur durchgeführt, bis der NCO-Gehalt auf die gewünschte NCO-Zahl gesunken ist. In der Regel wird die Reaktion durch Abkühlen auf Raumtemperatur abgebrochen, wenn die NCO-Zahl einen Wert von unter 0,5 % erreicht hat. Es kann jedoch auch vorteilhaft sein, bei Erreichen einer bestimmten NCO-Zahl dem Reaktionsgemisch Komponenten zuzufügen, die zur Reaktion mit Isocyanatgruppen befähigt sind. Dies können übliche Verkappungsmittel wie z.B. epsilon-Caprolacton, Butanonoxim sowie die weiteren dem Fachmann geläufigen Verkappungsmittel sein. Zur Umsetzung der restlichen NCO-Gruppen können aber auch Monoalkohole wie z.B. Methanol, Ethanol, Propanol oder Butanol verwendet werden. Die Umsetzung der restlichen NCO-Gruppen mit den vorstehend beschriebenen weiteren Komponenten kann ebenfalls unter Erwärmen, beispielsweise im vorstehend angegebenen Temperaturbereich von 50 bis 100°C, vorzugsweise 80 bis 100°C durchgeführt werden.

Bei der vorstehend beschriebenen Verfahrensweise handelt es sich um eine bevorzugte Verfahrensweise. Im Prinzip können die Reaktionskomponenten beliebig zur Reaktion gebracht werden. Beispielsweise kann die Umsetzung von Isocyanat mit Blockierungsmittel auch so durchgeführt werden, daß das Blockierungsmittel und der Katalysator vorgelegt werden und das Isocyanat, gegebenenfalls gelöst in Lösemittel, zugetropft wird. Die weiteren Reaktionsbedingungen sind die gleichen, wie bei dem zuvor beschriebenen bevorzugten Verfahren.

Bei dem genannten Verfahren ist es möglich nach beendeter Reaktion den Katalysator, der ungelöst im Reaktionsmedium verbleibt, leicht zu entfernen. Dies kann beispielsweise durch Abfiltrieren oder Abzentrifugieren erfolgen. Gegebenenfalls kann das Umsetzungsprodukt vorher oder nachher mit Lösemitteln verdünnt werden. Hier können auch Lösemittel eingesetzt werden, die mit freien Polyisocyanaten reagieren können. Geeignete Lösemittel sind organische Lösemittel, insbesondere lacKübliche Lösemittel, wie aromatische Kohlenwasserstoffe, beispielsweise Xylol, aliphatische Kohlenwasserstoffe, z.B. n-Hexan oder Cyclohexan, Gemische aliphatischer und/oder aromatischer Kohlenwasserstoffe, Ketone, wie z.B. Aceton, Methylisopropylketon, Ester, wie z.B. Butylacetat oder Ethylacetat, Ether, wie z.B. Methoxypropanol oder Butoxypropanol. Es können aber auch Alkohole, wie z.B. Isopropanol oder Hexanol eingesetzt werden.

Die erfindungsgemäß verwendeten Überzugsmittel enthalten Vernetzungsmittel wie Aminoplastharze (Komponente E). Es können die auf dem Lacksektor als Vernetzungsmittel üblichen Aminoplastharze verwendet werden. Zu geeigneten Aminoplastharzen zählen beispielsweise alkylierte Kondensate, die durch Umsetzung von Aminotriazinen und Amidotriazinen mit Aldehyden hergestellt werden. Zu deren Herstellung werden nach bekannten technischen Verfahren Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Formaldehyd und durch die Art des verwendeten Verätherungsalkohols.

Die Überzugsmittel, welche die erfindungsgemäß einzusetzenden Bindemittel enthalten, können neben den bereits genannten Lösemitteln zusätzlich lacKübliche Hilfsstoffe enthalten beispielsweise Verlaufmittel z.B. auf der Basis von (Meth)acryl-Homopolymerisaten, Silikonöle, Weichmacher wie Phosphorsäure, Phthalsäure- oder Zitronensäureester, Rheologiebeeinflusser, wie pyrogenes Siliziumoxid, Mikrogele, harnstoffgruppenhaltige Umsetzungsprodukte aus primären Aminen und Polyisocyanaten, hydriertes Ricinusöl, Härtungsbeschleuniger für die Umsetzung der erfindungsgemäßen hydroxyfunktionellen Bindemittel (Komponente A, B und C) mit geblockten Polyisocyanaten (Komponente D) und Aminoplastharzen (Komponente E): Phosphorsäure, Phosphorsäureester, Dicarbonsäure-Halbester, Zitronensäure; organische Metallsalze, wie Dibutylzinndilaurat, Zink-Naphthenat, Wismut-tricarboxylat, ferner tertiäre Aminogruppen enthaltende Verbindungen wie Triethylamin und Lichtschutzmittel.

Die erfindungsgemäßen Überzugsmittel sind besonders geeignet zur Erzeugung einer transparenten Deckschicht bei der Herstellung ofentrocknender Mehrschichtüberzüge. Die Deckschicht, kann nach dem Naß-in-Naß-Verfahren aufgetragen werden, worauf beide Schichten gemeinsam gehärtet werden. Die Erfindung betrifft daher auch das Verfahren zur Herstellung von Mehrschicht-Überzügen bzw. die Verwendung der Überzugsmittel zu deren Herstellung. Die erfindungsgemäßen lösemittelhaltigen Überzugsmittel können dabei als transparente Decklacke auf Schichten aus wäßrigen oder lösemittelhaltigen Basislacken für härtbare Mehrschichtüberzüge aufgetragen werden.

Die erfindungsgemäßen Überzugsmittel werden nach bekannten Verfahren, wie z.B. Spritzen, Tauchen, Rollen oder Rakeln, appliziert. Dabei wird auf das gegebenenfalls schon mit weiteren Lackschichten versehene Substrat der Decklacküberzug aufgetragen. Die erfindungsgemäßen Überzugsmittel können auch unter Verwendung von überkritischem Kohlendioxid als Lösemittel im Spritzverfahren appliziert werden. Dabei kann der Gehalt an organischen Lösemitteln stark verringert werden. Nach einer Abdunstphase wird das applizierte Überzugsmittel bevorzugt durch Erwärmen vernetzt. Die Einbrenntemperaturen liegen zwischen 110 bis 160°C, bevorzugt zwischen 120 bis 150°C. Die Schichtdicke des eingebrannten Films beträgt ca. 15 - 50 $\mu$m. Dabei entsteht ein vernetzter, harter, glänzender Lacküberzug. Eine bevorzugte Ausführungsform ist die Applikation des erfindungsgemäßen Überzugsmittels als Klarlacküberzug auf einen Basislack. Dabei kann naß-in-naß gearbeitet werden, oder der Basislack wird vorher durch Erwärmen getrocknet. Es entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten sie Effektpigmente, wie z.B. Metallic-Pigmente. Als Bindemittelbasis des Basislacks werden bevorzugt Polyester-, Polyurethan- oder Acrylatharze eingesetzt. Diese Bindemittel können gegebenenfalls über Vernetzer, z.B. Melamin- oder Isocyanatderivate, vernetzt werden.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z.B. für Haushaltsgeräte oder in der Möbelindustrie.

Die erfindungsgemäßen Überzugsmittel sind besonders geeignet zur Herstellung einer transparenten Deckschicht eines ofentrocknenden Mehrschichtüberzugs. Sie eignen sich insbesondere für die Serienlackierung von Kraftfahrzeugkarosserien und deren Teilen.

Die erfindungsgemäßen Überzugsmittel können naß-in-naß auf konventionelle, d.h. lösemittelhaltige oder wäßrige Lackschichten aufgetragen werden, worauf beide Schichten gemeinsam bei erhöhter Temperatur gehärtet werden. So ist es beispielsweise möglich, die transparenten Deckschichten, die aus den erfindungsgemäßen Klarlacken aufgebracht werden, nach dem Naß-in-Naß-Verfahren auf konventionelle oder wäßrige Basislacke aufzutragen. Die beiden Schichten können dann gemeinsam gehärtet werden. Härtungstemperaturen liegen beispielsweise in der Größenordnung von 120 bis 150°C. Die Härtungszeiten liegen beispielsweise in der Größenordnung von 20 bis 40 Minuten.

Die Erfindung betrifft daher auch die Herstellung von Mehrschichtüberzügen bzw. die Verwendung der erfindungsgemäßen Überzugsmittel zur Herstellung von Decklackschichten, z.B. Klarlackschichten, für härtbare Mehrschichtüberzüge.

Die folgenden Beispiele dienen zur Erläuterung der Erfindung. Alle Teile beziehen sich auf das Gewicht.

Herstellung der (Meth)acryl-Copolymerisate

**Herstellungsbeispiel AC-1**

In einen 2 Liter-Dreihals-Schliffkolben, der mit einem Rührwerk, Kontaktthermometer, Kugelkühler und Tropftrichter ausgerüstet ist, werden 173 g SOLVESSO 150 (Handelsprodukt der Shell AG) und 5 g n-Butanol, vorgelegt und unter Rühren bei eingeschalteter Rückflußkühlung auf 152°C geheizt. Innerhalb von 6 Stunden wird eine Mischung aus 67 g Acrylsäure, 160 g Styrol, 150 g Butylacrylat, 65 g 2-Hydroxyethylacrylat, 220 g CARDURA E10 (Handelsprodukt der Shell AG), 16 g Di-tert.-Butylperoxid und 22 g Tert.-Butylperoctoat kontinuierlich zudosiert. Anschließend wird der Ansatz 4 Stunden bei 150°C nachpolymerisiert, auf 80°C abgekühlt und mit 62 g Solvesso 100 und 60 g n-Butanol verdünnt.

**Herstellungsbeispiel AC-2**

In einen 2 Liter-Dreihals-Schliffkolben, der mit einem Rührwerk, Kontaktthermometer, Kugelkühler und Tropftrichter ausgerüstet ist, werden 163 g SOLVESSO 150 (Handelsprodukt der Shell AG), 5 g n-Butanol und 70 g VEOVA 10 (Handelsprodukt der Shell AG) vorgelegt und unter Rühren bei eingeschalteter Rückflußkühlung auf 152°C geheizt. Innerhalb von 5 Stunden wird eine Mischung aus 47 g Acrylsäure, 160 g Styrol, 125 g Butylmethacrylat, 110 g 2-Hydroxyethylmethacrylat, 150 g CARDURA E10 (Handelsprodukt der Shell AG), 16 g Di-tert.-Butylperoxid und 22 g Tert.-Butylperoctoat kontinuierlich zudosiert. Anschließend wird der Ansatz 5 Stunden bei 152°C nachpolymerisiert, auf 80°C abgekühlt und mit 72 g Solvesso 100 und 60 g n-Butanol verdünnt.

**Herstellungsbeispiel AC-3**

In einen 2 Liter-Dreihals-Schliffkolben, der mit einem Rührwerk, Kontaktthermometer, Kugelkühler und Tropftrichter ausgerüstet ist, werden 232 g SOLVESSO 100 (Handelsprodukt der Shell AG), vorgelegt und unter Rühren bei eingeschalteter Rückflußkühlung auf 148°C geheizt. Innerhalb von 5 Stunden wird eine Mischung aus 14 g Acrylsäure, 65 g Styrol, 224 g Butylmethacrylat, 141 g 2-Hydroxypropylmethacrylat, 45 g 2-Hydroxyethylacrylat, 52 g Laurylacrylat, 89 g Caprolacton, 4 g Di-tert.-Butylperoxid und 16 g Tert.-Butylperoctoat kontinuierlich zudosiert. Anschließend wird der Ansatz 5 Stunden bei 148°C nachpolymerisiert, auf 80°C abgekühlt und mit 46 g Solvesso 100 und 72 g n-Butanol verdünnt.

**Herstellungsbeispiel AC-4**

In einen 2-Liter-Dreihals-Schliffkolben, der mit einem Rührwerk, Kontaktthermometer, Kugelkühler und Tropftrichter ausgerüstet ist, werden 185 g SOLVESSO 100 (Handelsprodukt der Shell AG) und 5 g Butanol vorgelegt und unter Rühren bei eingeschalteter Rückflußkühlung auf 152°C geheizt. Innerhalb von 5 Stunden wird eine Mischung aus 67 g Acrylsäure, 160 g Styrol, 84 g Butylacrylat, 87 g 2-Hydroxyethylacrylat, 220 g CARDURA E10 (Handelsprodukt der Shell AG), 16 g SOLVESSO 100 (Handelsprodukt der Shell AG), 16 g Di-tert.-Butylperoxid und 16 g Tert.-Butylperoctoat kontinuierlich zudosiert. Anschließend wird der Ansatz 5 Stunden bei 148°C nachpolymerisiert, auf 80°C abgekühlt und mit 79 g Solvesso 100 und 65 g n-Butanol verdünnt.

**Herstellungsbeispiel PE-1**

In einen 2 Liter-Dreihalskolben, ausgerüstet mit Thermometer, Rührer und Kondensator werden 170,3 g Hexandiol-1,6 und 128,9 g Trimethylolpropan vorgelegt und aufgeschmolzen. Dann werden unter Rühren, Heizen und Überleiten von Inertgas 0,3 g hypophosphorige Säure, 37 g Xylol, 228,2 g Hexahydrophthalsäureanhydrid und 278,6 g Dimerfettsäure eingefüllt und mit einer Aufheizrate von 20°C/h auf 220°C geheizt. Nach Erreichen einer Säurezahl von 22 wird auf 100°C abgekühlt und mit 156 g Solvesso 100 (Handelsprodukt der Shell AG) verdünnt.

## Beispiel 1

### Herstellung eines Klarlacks

Ein einkomponentiger Klarlack wurde hergestellt durch homogenes Vermischen von 24,4 Teilen der Harzlösung aus Beispiel AC-3 mit 28 Teilen der Harzlösung aus Beispiel AC-1, 10,75 Teilen Solvesso 100, 7,5 Teilen einer 70 %igen butylglykolischen Lösung des mit Butanonoxim blockierten Isocyanurats von Isophorondiisocyanat, 3 Teilen Butanol, 16,6 Teilen einer handelsüblichen, 58 %igen Lösung eines hochreaktiven butanolveretherten Melaminharzes in Butanol/Xylol, 3,2 Teilen Butylglykolacetat, 1,2 Teilen eines 1 : 1-Gemisches handelsüblicher Lichtschutzmittel auf Benztriazol- und HALS-Basis, 1 Teil Silikonöl, 0,35 Teilen Dibutylzinndilaurat, 4 Teilen Butyldiglykol.

**Beispiel 2**

**Herstellung eines Klarlacks:**

Analog zu Beispiel 1 wurde ein einkomponentiger Klarlack hergestellt aus 31,6 Teilen der Harzlösung aus Beispiel AC-1, 13,8 Teilen der Harzlösung aus Beispiel PE-1, 20,2 Teilen einer handelsüblichen 70 %igen butanolischen Lösung eines mit Methanol und Butanol mischveretherten Melaminharzes, 11,7 Teilen der Lösung des blockierten Polyisocyanats aus Klarlackbeispiel 1, 11,24 Teilen Solvesso 100, 1,2 Teilen des Lichtschutzmittel-Gemisches aus Klarlackbeispiel 1, 0,8 Teilen Butanol, 3,3 Teilen Butylglykolacetat, 1 Teil Silikonöl, 0,76 Teilen Dibutylzinndilaurat und 4,4 Teilen Butyldiglykol.

**Beispiel 3**

**Herstellung eines Klarlacks:**

Analog zu Beispiel 1 wurde ein einkomponentiger Klarlack hergestellt aus 46,2 Teilen der Harzlösung aus Beispiel AC-4, 13,5 Teilen Solvesso 100, 7,1 Teilen einer handelsüblichen 70 %igen butanolischen Lösung eines mit Methanol und Butanol mischveretherten Melaminharzes, 21,4 Teilen einer 70 %igen Solvesso 100-Lösung eines mit Malonsäurediethylester blockierten Isocyanurats von Isophorondiisocyanat, 1,2 Teilen des Lichtschutzmittelgemisches aus Klarlackbeispiel 1, 0,84 Teilen Butanol, 3,5 Teilen Butylglykolacetat, 1 Teil Silikonöl, 0,76 Teilen Dibutylzinndilaurat und 4,5 Teilen Butyldiglykol.

Mit in der Automobilserienlackierung verwendetem handelsüblichen kathodisch abscheidbarem Elektrotauchlack (KTL) (18 $\mu$m) und handelsüblichem Füller (35 $\mu$m) vorbeschichtete Karosseriebleche werden mit handelsüblichem wasserverdünnbarem Metallicbasislack in einer Trockenschichtdicke von 15 $\mu$m lackiert und 6 min. bei 80°C vorgetrocknet. Direkt anschließend wird der Klarlack aus Klarlackbeispiel 1 bzw. 2 und 3 in einer Trockenschichtdicke von 35 $\mu$m durch Spritzauftrag naß-in-naß appliziert und nach 5 min. Ablüften bei Raumtemperatur 20 min. bei 140°C (Objekttemperatur) eingebrannt.

Analog wurden Vergleichsversuche mit Lacken des Stands der Technik durchgeführt. Die erhaltenen Ergebnisse sind in der folgenden Tabelle aufgeführt. Die Tests wurden nach allgemeinen Industrienormen durchgeführt. Zur Prüfung der Klarlacke auf Schwefelsäurebeständigkeit wurde der Tropfen-Test mit 10 %iger bzw. 38 %iger $H_2SO_4$ gewählt. Die Prüfbleche werden auf eine beheizbare Platte gelegt und auf 65°C geheizt. Dabei muß gewährleitstet sein, daß die Bleche zur optimalen Temperaturübertragung plan aufliegen. Am Ende der Aufheizphase, d.h. bei 65°C wird pro Minute ein Tropfen auf die Klarlackoberfläche appliziert. Die Gesamtzeit beträgt 30 Minuten. Nach Ablauf der Prüfzeit wird die Lackierung mit Wasser abgewaschen. Wenn notwendig, kann zum Reinigen zusätzlich eine Bürste verwendet werden.

Zur Beurteilung der Schwefelsäurebeständigkeit wird die Einwirkzeit in Minuten angegeben, bei der die erste sichtbare Filmveränderung (Quellung), Beschädigung (Vermattung) und der Basislack-Angriff auftrat.

## Tabelle

### Erfindungsgemäße Klarlacke:

| Beispiel: | 1 | 2 | 3 |
|---|---|---|---|
| Vergilbung: | keine | gering | keine |
| Verarbeitungsfest-körper (%) | 47,1 | 51,2 | 48,1 |
| Glanz 20° | 84 | 88 | 88 |
| Pendelhärte: (Anzahl der Schwingungen) | 75 | 77 | 84 |
| Schwefelsäure-Test 10 %ige $H_2SO_4$,30'60°C | | | |
| Quellung | 13 | 17 | 14 |
| Vermattung | 21 | 22 | 30 |
| Basecoat-Angriff | 24 | 30 | >30 |
| Schwefelsäure-Test 38 %ige $H_2SO_4$,30'60°C | | | |
| Quellung | 20 | 11 | 13 |
| Vermattung | >30 | >30 | 28 |
| Basecoat-Angriff | 28 | 30 | >30 |
| Bleistifthärte: | HB | HB | HB |

### Vergleichsklarlacke:

| | JP-A- 246483 | GB-A- 2254328 | JP-A- 158079 | DE-A- 4204518 |
|---|---|---|---|---|
| Beispiel: | 2 | 4 | 1 | 7 |
| Vergilbung: | gering | stark | stark | keine |
| Verarbeitungsfest-körper (%) | 32,4 | 41,5 | 58,1 | 50,8 |
| Glanz 20° | 83 | 58 | 29 | 82 |
| Pendelhärte (Anzahl der Schwingungen) | 84 | 85 | 38 | 82 |
| Schwefeläsure-Test 10 %ige $H_2SO_4$,30'60°C | | | | |
| Quellung | 14 | 12 | 10 | 10 |

| Vermattung | >30 | >30 | 13 | 13 |
|---|---|---|---|---|
| Basecoat-Angriff | 22 | 18 | 19 | 19 |

Schwefelsäure-Test

39 %ige $H_2SO_4$, 30'60°C

| Quellung | 9 | 2 | 2 | 5 |
|---|---|---|---|---|
| Vermattung | >30 | 11 | 11 | 11 |
| Basecoat-Angriff | 25 | 15 | 15 | 13 |
| Bleistifthärte: | HB | F | 2B | HB |

Aus der vorstehenden Tabelle ist ersichtlich, daß sich die erfindungsgemäßen Überzugsmittel gegenüber der JP-A-246 483 insbesondere durch einen verbessern Festkörpergehalt und eine verbesserte Säurebeständigkeit bei erhöhter Temperatur auszeichnen. Gegenüber GB-A-2 254 328 weisen die erfindungsgemäßen Überzugsmittel ebenfalls einen verbesserten Festkörpergehalt, verbesserten Glanz und verbesserte Säurebeständigkeit auf. Glanz, Pendelhärte und Säurebeständigkeit sind erfindungsgemäß auch im Vergleich mit JP-A-158 079 verbessert. Im Vergleich mit der DE-A-42 04 518 zeigt sich erfindungsgemäß eine wesentlich verbesserte Säurebeständigkeit.

In den folgenden Beispielen beziehen sich Teile (T) und % auf das Gewicht.

**Herstellungsbeispiel PI-1**

**Umsetzung von Isophorondiisocyanat-Isocyanurat mit Malonsäurediethylester**

376 T Isophorondiisocyanat-Isocyanurat (unter dem Handelsnamen Vestanat IPDI T-1890 der Fa. Hüls erhältlich) werden in 350 T Solvesso 100 unter Aufheizen auf 80°C gelöst. Anschließend werden 4 T wasserfreies Lithiumhydroxid zugegeben. 271 T Malonsäurediethylester werden dann so zugetropft, daß die Reaktionstemperatur 90°C nicht übersteigt. Die Reaktionsmischung wird solange auf 90°C gehalten, bis ein NCO-Gehalt von < 0,5 % erreicht ist. Durch Filtration über 1 µm-Filter wird das ungelöste Lithiumhydroxid abfiltriert.

Endwerte: FK (1 h/150°C) : 60,7, Viskosität (25°C): 2400 mPas, Farbzahl (Gardner): 2; Lithiumgehalt (Atomabsorptionsspektroskopie: 48 ppm.)

**Herstellungsbeispiel PI-2**

**Umsetzung von Hexamethylendiisocyanat-Isocyanurat mit Malonsäurediethylester**

Analog Beispiel 1) werden 351 T Hexamethylendiisocyanat-Isocyanurat (unter dem Handelsnamen Tolonat HDT/100 der Fa. Rhone-Poulenc erhältlich) in 350 T Solvesso 100 in Gegenwart von 4,3 T wasserfreiem Lithiumhydroxid mit 295 T Malonsäurediethylester umgesetzt.

Endwerte: FK (1 h/150°C): 60,3 %, Viskosität (25°C): 680 mPas, Farbzahl (Gardner): 1.

**Herstellungsbeispiel PI-3**

**Umsetzung von Isophorondiisocyanat-Isocyanurat mit Acetessigsäureethylester**

Analog Beispiel 1) werden 410 T Vestanat IPDI T-1890 in 350 T Solvesso 100 in Gegenwart von 4,1 T wasserfreiem Lithiumhydroxid mit 240 T Acetessigsäureethylester umgesetzt.

Endwerte: FK (1 H/150°C): 61 %, Viskosität (25°C): 1300 mPas, Farbzahl (Gardner): 3.

Der Einsatz der in den Herstellungsbeispielen P-1, P-2 und P-3 erhaltenen blockierten Polyisocyanate führt zu besonders vergilbungsfreien Lackierungen.

11

**Patentansprüche**

1. Überzugsmittel, geeignet zur Herstellung transparenter Deckschichten von Mehrschichtüberzügen enthaltend Bindemittel auf der Basis hydroxyfunktioneller (Meth)acryl-Copolymerisate, geblockter Polyisocyanate, Aminoplastharze und gegebenenfalls hydroxyfunktioneller Polyesterharze, neben lacküblichen Additiven und Lösemitteln, dadurch gekennzeichnet, daß die Bindemittel enthalten:

   A) 25 - 90 Gew.-% eines oder mehrerer hydroxyfunktioneller (Meth)acryl-Copolymerisate, erhältlich aus

   a1) 10 - 30 Gew.-% Styrol und/oder einem oder mehreren Styrol-Derivaten

   a2) 20 - 40 Gew.-% eines oder mehrerer Glycidylester und/oder Vinylester von alpha,alpha'-dialkylsubstituierten verzweigten aliphatischen Monocarbonsäuren

   a3) 5 - 15 Gew.-% eines oder mehrerer Hydroxyalkylester der (Meth)acrylsäure

   a4) 1 - 15 Gew.-% (Meth)acrylsäure

   a5) 15 - 35 Gew.-% eines oder mehrerer (Meth)acrylsäureester

   B) 0 - 40 Gew.-% eines oder mehrerer hydroxyfunktioneller (Meth)acryl-Copolymerisate erhältlich aus

   b1) 5 - 20 Gew.-% Styrol und/oder einem oder mehreren Styrol-Derivaten

   b2) 5 - 20 Gew.-% Caprolacton

   b3) 10 - 30 Gew.-% eines oder mehrerer Hydroxyalkylester von (Meth)acrylsäure

   b4) 1 - 3 Gew.-% (Meth)acrylsäure

   b5) 30 - 50 Gew.-% eines oder mehrerer (Meth)acrylsäureester

   C) 0 - 40 Gew.-% eines oder mehrerer hydroxylfunktioneller Polyester

   D) 5 - 35 Gew.-% eines oder mehrerer geblockter Polyisocyanate

   E) 5 - 30 Gew.-% eines oder mehrerer Aminoplastharze

   wobei die Summe der Komponenten a1) bis a5), b1) bis b5) und A) bis E) sich jeweils zu 100 ergänzen.

2. Überzugsmittel nach Anspruch 1, dadurch gekennzeichnet, daß als Komponente A) und B) (Meth)acryl-Copolymerisate eingesetzt werden jeweils mit einer Hydroxylzahl von 40 - 200 mg KOH/g, einer Säurezahl von 1 - 30 mg KOH/g, einem Gewichtsmittel der Molmasse von 2500 bis 10000 g/Mol und einer Glasübergangstemperatur von -20°C bis +40°C.

3. Überzugsmittel nach Anspruch 1 oder 2, dadurch gekennzeichnet, daß als Komponente C) ein oder mehrere Polyester eingesetzt werden, mit einer Säurezahl von 1 - 50 mg KOH/g, einer Hydroxylzahl von 30 - 200 mg KOH/g und einem Gewichtsmittel der Molmasse von 500 - 4000 g/Mol.

4. Überzugsmittel nach einem der Ansprüche 1 bis 3, dadurch gekennzeichnet, daß es pigmentfrei oder mit transparenten Pigmenten als Klarlack formuliert ist.

5. Überzugsmittel nach einem der Ansprüche 1 bis 4, dadurch gekennzeichnet, daß die blockierten Polyisocyanate der Komponente D) hergestellt wurden durch Umsetzung von Polyisocyanaten mit freien NCO-Gruppen unter wasserfreien Bedingungen mit aciden Wasserstoff enthaltenden Blockierungsmitteln in Anwesenheit von basischen Katalysatoren, wobei man als basische Katalysatoren ein oder mehrere Alkalihydroxide verwendet.

6. Überzugsmittel nach Anspruch 5, dadurch gekennzeichnet, daß man als Alkalihydroxid Lithiumhydroxid verwendet.

7. Überzugsmittel nach Anspruch 4 oder 5, dadurch gekennzeichnet, daß man als Blockierungsmittel Malonsäuredialkylester und/oder Acetessigsäurealkylester umsetzt.

8. Verfahren zur Herstellung von Mehrschichtüberzügen durch Auftrag einer Basislackschicht auf ein gegebenenfalls bereits mit einer oder mehreren Überzugsschichten versehenes Substrat, und Überlackieren der erhaltenen Basislackschicht nach dem Trocknen oder naß-in-naß mit einer Decklackschicht aus einem transparenten Überzugsmittel nach einem der Ansprüche 1 bis 7.

9. Verfahren nach Anspruch 8, dadurch gekennzeichnet, daß es zur Herstellung von Mehrschichtlackierungen von Kraftfahrzeugkarosserien oder deren Teilen durchgeführt wird.

10. Verwendung der Überzugsmittel nach einem der Ansprüche 1 bis 7 zur Herstellung transparenter Deckschichten von Mehrschichtüberzügen, insbesondere auf dem Kraftfahrzeugsektor.

11. Mit Mehrschichtüberzügen versehene Objekte, enthaltend einen Decklacküberzug aus einem Überzugsmittel nach einem der Ansprüche 1 bis 7.